# EUROPEAN PATENT APPLICATION

(11) **EP 4 737 271 A1**
(43) Date of publication of application: **06.05.2026**
(21) Application number: 24827721.2
(22) Date of filing: 06.02.2024
(51) Int. Cl.: B62D 1/16, B62D 5/04

(54) **STEERING DEVICE**

(30) Priority: 30.06.2023 WO PCT/JP2023/024377; 18.08.2023 WO PCT/JP2023/029809
(71) Applicant: JTEKT CORPORATION, Kariya-shi, Aichi 448-8652 (JP)
(72) Inventor: IKEDA, Kosuke, Kariya-shi, Aichi 448-8652 (JP); MIYAKE, Junya, Kariya-shi, Aichi 448-8652 (JP); TAMAIZUMI, Terutaka, Kariya-shi, Aichi 448-8652 (JP); NAMIKAWA, Isao, Kariya-shi, Aichi 448-8652 (JP); ANRAKU, Koji, Kariya-shi, Aichi 448-8652 (JP); HOSONO, Hiroshi, Kariya-shi, Aichi 448-8652 (JP); OYA, Toshiaki, Kariya-shi, Aichi 448-8652 (JP)
(74) Representative: Winter, Brandl - Partnerschaft mbB
(86) International application number: PCT/JP2024/003913
(87) International publication number: WO 2025/004429

(57) **Abstract**

A steering device (10) includes a steering shaft (14) that is able to be operated in a state in which a power transmission path between the steering shaft (14) and steered wheels (34) is separated, a coupled rotating body (80) including a second opposing portion (82) of the steering shaft (14), and a rotation stopping body (60) including a first opposing portion (62) of the steering shaft (14). The first opposing portion (62) and the second opposing portion (82) come into contact with each other in the circumferential direction of the steering shaft (14). The first opposing portion (62) is provided with an annular elastic member (64) mounted to an outer periphery thereof, an outer face (62b) has a first radial-direction distance (R1), and an inner face (62c) has a second radial-direction distance (R3). A distal end face (82a) of the second opposing portion (82) has a third radial-direction distance (R2). The third radial-direction distance (R2) is greater than a value obtained by adding, to the second radial-direction distance (R3), half a difference between the first radial-direction distance (R1) and the second radial-direction distance (R2).

## Description

### TECHNICAL FIELD

The present disclosure relates to a steering device.

### BACKGROUND ART

Patent Document 1 below describes a device that mechanically limits a rotation region of a steering shaft in a steer-by-wire system. More specifically, this device includes a first rotating member that rotates coupled with the steering shaft, and a second rotating member that is rotated along with the first rotating member. This device also includes a restricting member that comes into contact with the second rotating member and restrains the second rotating member from rotating when a rotation angle of the second rotating member reaches a predetermined angle. When the first rotating member rotates a predetermined amount from a steering angle at which the rotation of the second rotating member is restrained by the regulating member, the first rotating member and the second rotating member then come into contact with each other such that the second rotating member restrains rotation of the first rotating member. This restrains the first rotating member from rotating.

Furthermore, the same Document 1 describes that contact faces of the first rotating member and the second rotating member are covered with an elastic member (paragraph "0076").

### Related Art Documents

### Patent Documents

Patent Document 1: Japanese Unexamined Patent Application Publication No. 2020-69844 (JP 2020-69844 A)

### SUMMARY OF THE INVENTION

### Problem to be Solved by the Invention

However, in a case in which the contact faces are covered with an elastic member as described above, the steering angle readily fluctuates at a point in time that the rotation of the steering shaft is restricted. Accordingly, precision of detecting an upper limit value of the rotation angle of the steering shaft decreases.

### Means for Solving the Problem

One aspect of the present disclosure provides a steering device including a steering shaft that is able to be operated in a state in which a power transmission path between the steering shaft and steered wheels of a vehicle is separated. The steering device includes a coupled rotating body configured to rotate about an axis of the steering shaft in conjunction with rotation of the steering shaft, and a rotation stopping body configured to stop the coupled rotating body by coming into contact with the coupled rotating body, in which the rotation stopping body includes a first opposing portion that opposes the coupled rotating body when coming into contact with the coupled rotating body, the coupled rotating body includes a second opposing portion that opposes the rotation stopping body when coming into contact with the rotation stopping body, the first opposing portion and the second opposing portion are able to come into contact with each other in a circumferential direction of the steering shaft, the first opposing portion is provided with an annular elastic member mounted to an outer periphery of the first opposing portion, the first opposing portion includes an outer face situated on an outer side in a radial direction of the steering shaft and an inner face situated on an inner side in the radial direction of the steering shaft, the second opposing portion includes a distal end face situated on the outer side in the radial direction of the steering shaft, the outer face has a first radial-direction distance relative to the axis of the steering shaft, the inner face has a second radial-direction distance relative to the axis of the steering shaft, the distal end face has a third radial-direction distance relative to the axis of the steering shaft, and the third radial-direction distance is greater than a value obtained by adding, to the second radial-direction distance, half of a difference between the first radial-direction distance and the second radial-direction distance.

### BRIEF DESCRIPTION OF THE DRAWINGS

[FIG. 1] is a diagram illustrating a configuration of a steering system according to a first embodiment.
[FIG. 2] is an exploded perspective view illustrating a configuration of part of a reactive force actuator illustrated in FIG. 1.
[FIG. 3] is an exploded perspective view illustrating the configuration of part of the reactive force actuator illustrated in FIG. 2.
[FIG. 4] is a diagram illustrating a relation between a housing protrusion and an intermediate stopper protrusion illustrated in FIG. 2 and FIG. 3.
[FIG. 5] is a cross-sectional view illustrating the configuration of part of the reactive force actuator illustrated in FIG. 2.
[FIG. 6] is a diagram illustrating operations of a stopper function of the reactive force actuator illustrated in FIG. 2.
[FIG. 7] is a diagram illustrating a state in which the housing protrusion and the intermediate stopper protrusion are in contact with each other via an O-ring.

### MODES FOR CARRYING OUT THE INVENTION

An embodiment will be described below with reference to the drawings.

### "Prerequisite Configuration"

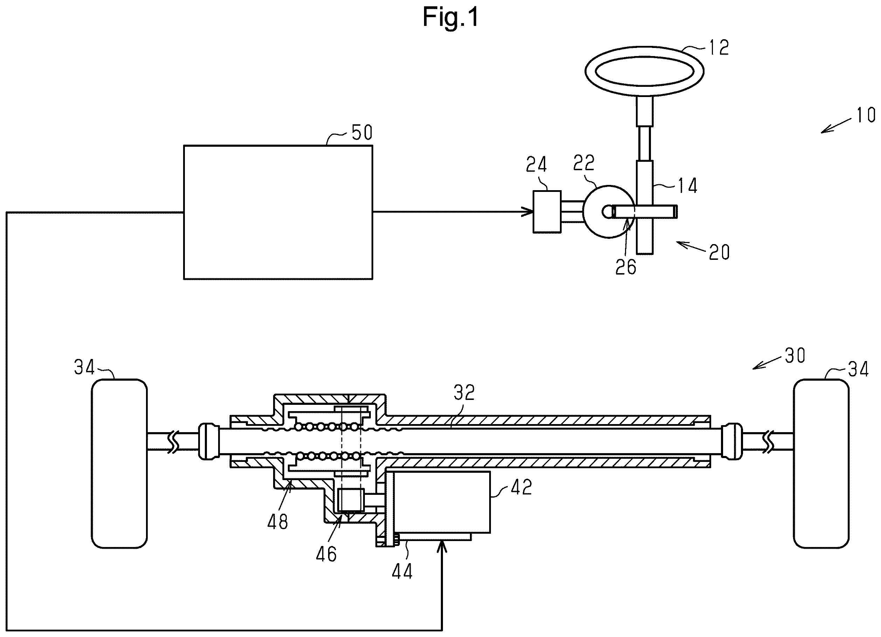

A steering device 10 of a vehicle illustrated in FIG. 1 is a steer-by-wire system. That is to say, the steering device 10 includes a steering shaft 14 that can be operated in a state in which a power transmission path between the steering shaft 14 and steered wheels 34 of the vehicle is separated. More specifically, the steering device 10 includes a steering wheel 12, the steering shaft 14, a reactive force actuator 20, and a steering actuator 30. The steering shaft 14 is linked to the steering wheel 12. The reactive force actuator 20 is used to apply a force that counters force exerted by a driver when operating the steering wheel 12. The reactive force actuator 20 includes a reactive force motor 22, a reactive force inverter 24, a reactive force reduction mechanism 26, and further a device for restricting rotation of the steering shaft 14, which will be described later. The reactive force motor 22 applies a steering reactive force, which is a force that counters steering, to the steering wheel 12 via the steering shaft 14. The reactive force motor 22 is linked to the steering shaft 14 via the reactive force reduction mechanism 26. The reactive force reduction mechanism 26 is made up of, for example, a worm and wheel.

The steering actuator 30 is used to steer the steered wheels 34 in accordance with steering intention of the driver, indicated by operation of the steering wheel 12 by the driver. The steering actuator 30 includes a steered shaft 32, a steering motor 42, a steering inverter 44, a steering transmission mechanism 46, and a conversion mechanism 48. The steering transmission mechanism 46 is made up of a belt transmission mechanism. Rotational power of the steering motor 42 is transmitted to the conversion mechanism 48 by the steering transmission mechanism 46. The conversion mechanism 48 converts the rotational power that is transmitted thereto into displacement power in an axial direction of the steered shaft 32. The steered wheels 34 are steered by displacement of the steered shaft 32 in the axial direction.

The steering control device 50 controls controlled variables of the steering wheel 12 and the steered wheels 34, which are objects of control. That is to say, the steering control device 50 controls the steering reactive force that counters steering by the driver, which is the controlled variable of the steering wheel 12. The steering control device 50 also controls the steered angle, which is the controlled variable of the steered wheels 34. The steered angle is a turning angle at which the steered wheels 34 are turned.

The steering control device 50 executes processing for learning a neutral position of the steering shaft 14 under predetermined conditions. The neutral position corresponds to a straight-ahead direction of the vehicle. As an example, the steering control device 50 detects an upper limit value on a right-turn side and an upper limit value on a left-turn side of the steering shaft 14, and thereby determines a midpoint therebetween as the neutral position.

### "Configuration of Reactive Force Actuator 20"

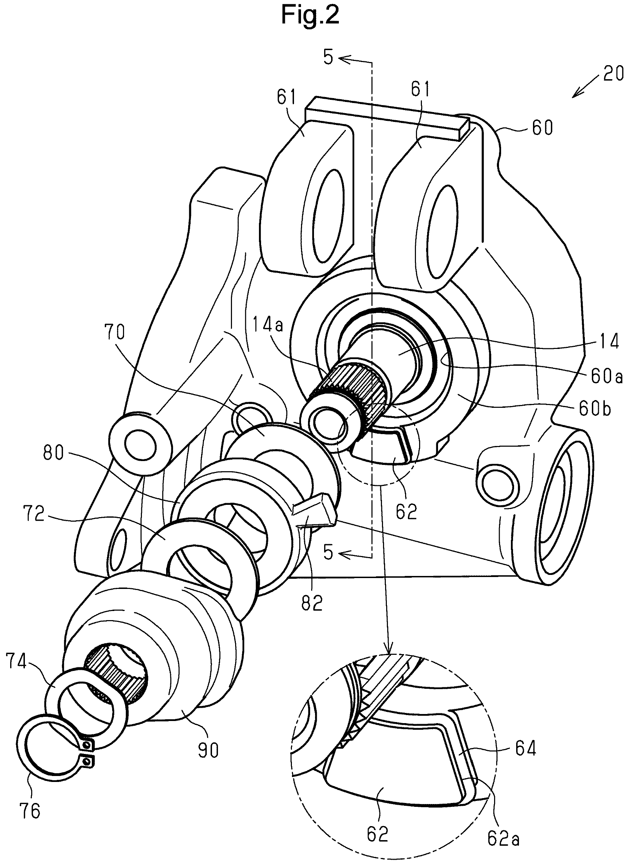

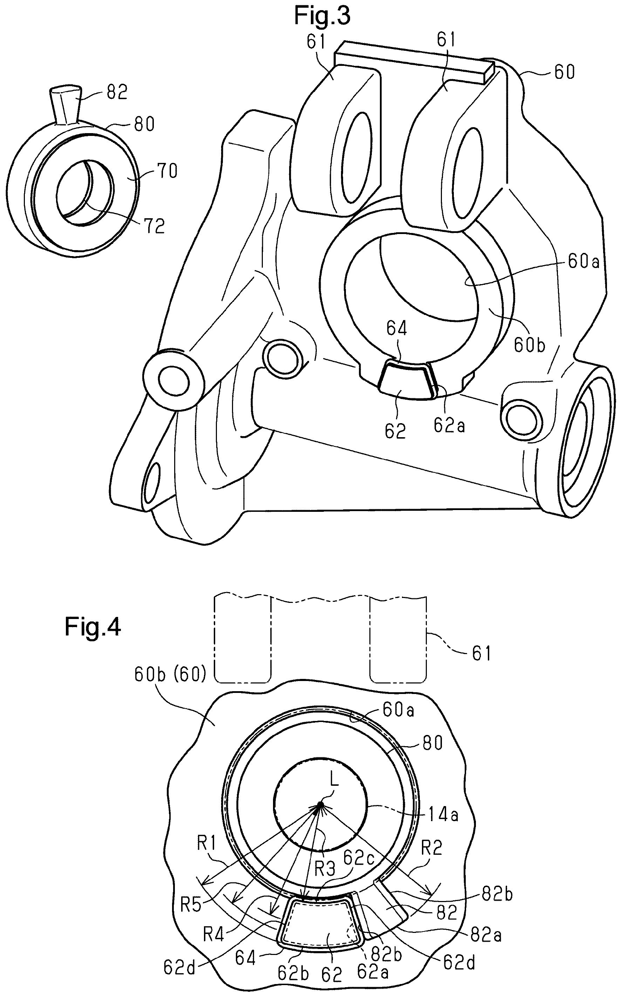

FIG. 2 and FIG. 3 illustrate a configuration of part of the reactive force actuator 20. As illustrated in FIG. 2 and FIG. 3, the reactive force actuator 20 includes a housing 60. The housing 60 is fixed to a vehicle body via, for example, a tilt hinge 61 that enables the reactive force actuator 20 to swing relative to the vehicle body. The steering shaft 14 is inserted into the housing 60. The housing 60 rotatably supports the steering shaft 14. The steering shaft 14 is inserted into a shaft hole 60a of the housing 60. A first end 14a of the steering shaft 14 is an end portion opposite to a second end that is linked to the steering wheel 12. The first end 14a of the steering shaft 14 protrudes beyond a first surface 60b of the housing 60. The first surface 60b is a surface that extends in a direction intersecting the axial direction of the steering shaft 14, for example, in a direction orthogonal to the axial direction.

A plurality of ring-shaped members is inserted into the first end 14a of the steering shaft 14. The ring-shaped members include a washer 70, an intermediate stopper 80, a washer 72, an end stopper 90, a wave washer 74, and a C-snap ring 76.

The housing 60 is provided with a housing protrusion 62 that restricts the rotation of the intermediate stopper 80. The housing protrusion 62 protrudes from the first surface 60b of the housing 60 in the axial direction of the steering shaft 14, more specifically, toward the first end 14a. The housing protrusion 62 is provided on a portion of a peripheral edge of the shaft hole 60a. The housing protrusion 62 has, for example, a fan-like shape as viewed in the axial direction of the steering shaft 14. A phase position of the housing protrusion 62 relative to the peripheral edge of the shaft hole 60a is, for example, a position farthest from the tilt hinge 61. In the present embodiment, the housing 60 is an example of a rotation stopping body. Also, the housing protrusion 62 is an example of a first opposing portion.

A groove 62a is provided on an outer periphery of the housing protrusion 62, extending over an entire circumferential direction region of the housing protrusion 62. The housing protrusion 62 is provided with an O-ring 64 that is mounted in the groove 62a. The O-ring 64 is made of rubber, such as nitrile rubber, for example. In the present embodiment, the O-ring 64 is an example of an annular elastic member.

As illustrated in FIG. 2 and FIG. 3, the intermediate stopper 80, which is a coupled rotating body, is provided with an intermediate stopper protrusion 82, which is annular in shape, and of which rotation is limited by the housing protrusion 62. The intermediate stopper protrusion 82 protrudes from an outer peripheral face of the intermediate stopper 80 in an outward radial direction from the steering shaft 14, more specifically, away from the steering shaft 14. The intermediate stopper protrusion 82 is provided on a portion of an outer periphery of the intermediate stopper 80. The intermediate stopper protrusion 82 has, for example, a wedge-like shape as viewed in the axial direction of the steering shaft 14.

FIG. 4 is a diagram schematically indicating a relation between the housing protrusion 62 and the intermediate stopper protrusion 82 as viewed in the axial direction of the steering shaft 14. As illustrated in FIG. 4, the housing protrusion 62 includes an outer face 62b situated on an outer side in the radial direction of the steering shaft 14 and an inner face 62c situated on an inner side in the radial direction of the steering shaft 14. The outer face 62b and the inner face 62c are, for example, arcuate faces centered on an axis L of the steering shaft 14. The outer face 62b has an outer radius R1 relative to the axis L of the steering shaft 14. The outer radius R1 corresponds to a first radial-direction distance, which is a radial-direction distance of the outer face 62b from the axis L of the steering shaft 14. The inner face 62c has an inner radius R3 relative to the axis L of the steering shaft 14. The inner radius R3 corresponds to a second radial-direction distance, which is a radial-direction distance of the inner face 62c from the axis L of the steering shaft 14. The intermediate stopper protrusion 82 includes a distal end face 82a that is situated outward in the radial direction of the steering shaft 14. The distal end face 82a is, for example, an arcuate face of which the center is the axis L of the steering shaft 14. The distal end face 82a has an outer radius R2 with respect to the axis L of the steering shaft 14. The outer radius R2 corresponds to a third radial-direction distance, which is a radial-direction distance of the distal end face 82a with respect to the axis L of the steering shaft 14. The housing protrusion 62 also includes two circumferential side faces 62d that are situated on the outer side in a circumferential direction about the axis L of the steering shaft 14. The circumferential side faces 62d are configured as flat faces in the radial direction of the steering shaft 14.

The distal end face 82a of the intermediate stopper protrusion 82 is flush with the outer face 62b of the housing protrusion 62 in the circumferential direction of the steering shaft 14, for example. That is to say, the outer radius R2 is the same as the outer radius R1. The outer radius R2 is greater than a value R4 obtained by adding, to the inner radius R3, half a difference between the outer radius R1 and the inner radius R3. Also, the outer radius R2 is equal to or greater than a value R5 obtained by adding, to the inner radius R3, three-quarters of the difference between the outer radius R1 and the inner radius R3. A range over which the intermediate stopper protrusion 82 extends in the circumferential direction, and a range over which the housing protrusion 62 extends in the circumferential direction, are adjusted from a viewpoint of ensuring strength. In the present embodiment, the intermediate stopper 80 is an example of a coupled rotating body, and in particular is an example of a second rotating member. Also, the intermediate stopper protrusion 82 is an example of a second opposing portion. The intermediate stopper protrusion 82 also includes two circumferential side faces 82b that are situated on the outer sides in the circumferential direction of the steering shaft 14. The circumferential side faces 82b are configured as flat faces in the radial direction of the steering shaft 14. The circumferential side faces 82b can come into contact with the circumferential side faces 62d in the circumferential direction via the O-ring 64. Precision of the flatness of the circumferential side faces 62d and the circumferential side faces 82b is ensured within a range that yields the advantage of suppressing displacement of the O-ring 64 relative to the groove 62a, which will be described later.

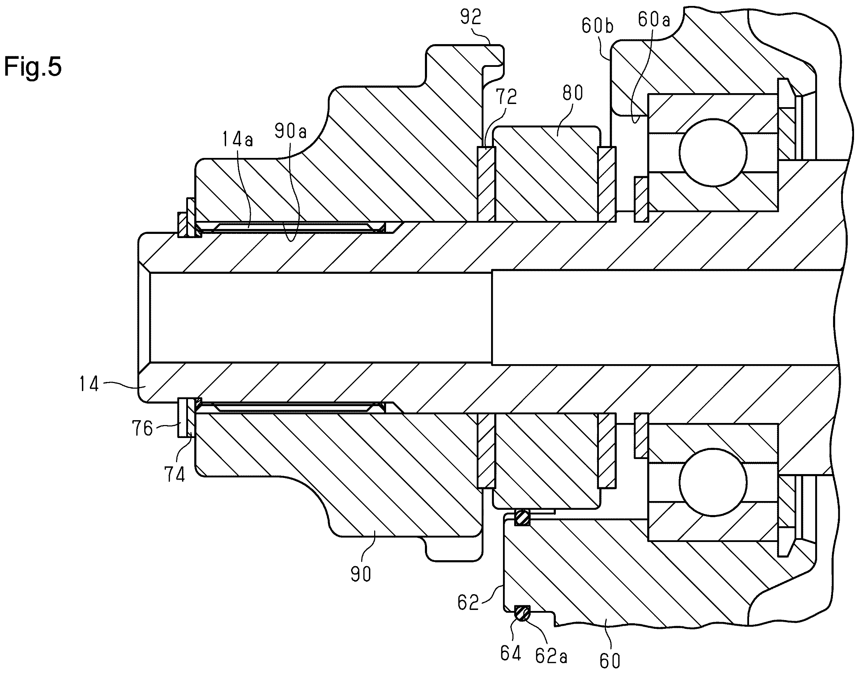

FIG. 5 illustrates a cross-section taken along line 5-5 in FIG. 2. As illustrated in FIG. 5, an elastic force in a rightward direction in the drawing is applied to the end stopper 90 by the wave washer 74. Thus, an elastic force in the rightward direction is applied to the intermediate stopper 80 via the washer 72. On the other hand, the first end 14a of the steering shaft 14 on a leftward side in the drawing is a serrated shaft that has been subjected to serration processing and has a smaller diameter than other parts. The washer 70, the intermediate stopper 80, and the washer 72 are inserted into the first end 14a of the steering shaft 14. Accordingly, rightward displacement of the washer 70 in the drawing is restricted. Accordingly, the intermediate stopper 80 is subjected to elastic force toward the rightward side in the drawing by the washer 72, and also is subjected to elastic force toward the leftward side in the drawing by the washer 70.

The end stopper 90 includes a serrated hole 90a that has been subjected to serration processing. The end stopper 90 is fixed to the steering shaft 14 by serration fitting of the serrated hole 90a and the first end 14a. Accordingly, the end stopper 90 rotates integrally with the steering shaft 14 in conjunction with rotation of the steering shaft 14. In conjunction with rotation of the end stopper 90, the intermediate stopper 80 is rotated along therewith. In the present embodiment, the end stopper 90 is an example of a first rotating member.

### "Restriction of Rotation of Steering Shaft 14"

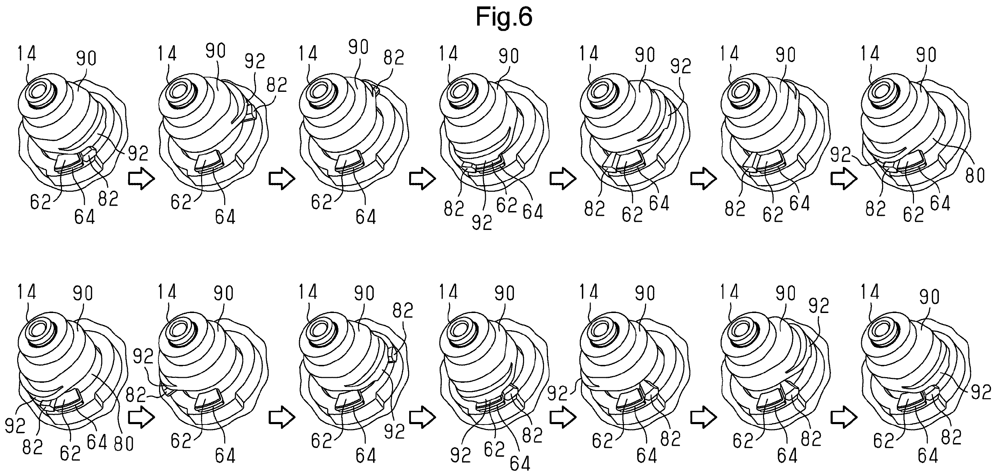

An upper tier in FIG. 6 illustrates a case in which the steering shaft 14 rotates to a right-turn side. A left end of the upper tier in FIG. 6 illustrates a state in which a steering angle θs, which is a rotation angle of the steering shaft 14, has a value corresponding to an end portion on a left-turn side. The upper tier in FIG. 6 illustrates a state in which the steering shaft 14 rotates toward the right-turn side as transitioning rightward in the drawing. In particular, a right end of the upper tier in FIG. 6 illustrates a state in which the steering angle θs has a value corresponding to an end portion on the right-turn side.

As illustrated in the upper tier in FIG. 6, in a case in which the steering shaft 14 rotates from the end portion on the left-turn side by making a right turn, the intermediate stopper 80 is rotated along with the end stopper 90 in conjunction with rotation of the end stopper 90. The middle of the upper tier in FIG. 6 illustrates a state in which the intermediate stopper protrusion 82 has come into contact with the housing protrusion 62 via the O-ring 64. Accordingly, the intermediate stopper 80 is in a state of being restrained from turning right by the housing protrusion 62, and cannot turn right any further. Hence, the end stopper 90 rotates alone in conjunction with rotation of the steering shaft 14. The steering shaft 14 then rotates further, and accordingly an end stopper protrusion 92 comes into contact with the intermediate stopper protrusion 82. Thus, the end stopper 90 is in a state where rightward turning thereof is restrained by the intermediate stopper protrusion 82, and can no longer turn further to the right. This state is illustrated at the right end of the upper tier in FIG. 6. In this state, the steering shaft 14 cannot rotate toward the right side any further. The steering angle θs at this time is the upper limit value on the right-turn side.

The lower tier in FIG. 6 illustrates a case in which the rotation angle of the steering shaft 14 rotates to the left-turn side. The left end of the lower tier in FIG. 6 illustrates a state in which the steering angle θs has a value corresponding to the end portion on the right-turn side. The lower tier in FIG. 5 illustrates a state in which the steering shaft 14 rotates toward the left-turn side as transitioning rightward in the drawing. In particular, a right end of the lower tier in FIG. 6 illustrates a state in which the steering angle θs has a value corresponding to the end portion on the left-turn side.

As illustrated in the lower tier in FIG. 6, in a case in which the steering shaft 14 rotates from the end portion on the right-turn side by making a left turn, the intermediate stopper 80 is rotated along with the end stopper 90 in conjunction with rotation of the end stopper 90. The middle of the lower tier in FIG. 6 illustrates a state in which the intermediate stopper protrusion 82 has come into contact with the housing protrusion 62 via the O-ring 64. Accordingly, the intermediate stopper 80 is in a state of being restrained from turning left by the housing protrusion 62, and cannot turn left any further. Hence, the end stopper 90 rotates alone in conjunction with rotation of the steering shaft 14. The steering shaft 14 then rotates further, and accordingly an end stopper protrusion 92 comes into contact with the intermediate stopper protrusion 82. Thus, the end stopper 90 is in a state in which leftward turning thereof is restrained by the intermediate stopper protrusion 82, and can no longer turn further to the left. This state is illustrated at the right end of the lower tier in FIG. 6. In this state, the steering shaft 14 cannot further rotate toward the left side any further. The steering angle θs at this time is the upper limit value on the left-turn side.

Note that FIG. 6 exemplifies a case in which the steering angle θs changes from one of two values of a value corresponding to the end portion of the left-turn side and a value corresponding to the end portion of the right-turn side, to the other. However, in reality, it is rare for the steering angle θs to reach a value corresponding to the end portion of the left-turn side or to reach a value corresponding to the end portion of the right-turn side. The steering angle θs normally varies within an intermediate region between the value corresponding to the end portion of the left-turn side and the value corresponding to the end portion of the right-turn side, which are set by the steering control device 50. In this case, in a state in which the end stopper protrusion 92 is not in contact with the intermediate stopper protrusion 82, the intermediate stopper 80 is rotated along with the end stopper 90 in conjunction with rotation of the end stopper 90.

### <Effects of Present Embodiment>

### "Regarding Contact State of housing protrusion 62 and Intermediate stopper protrusion 82 Via O-ring 64"

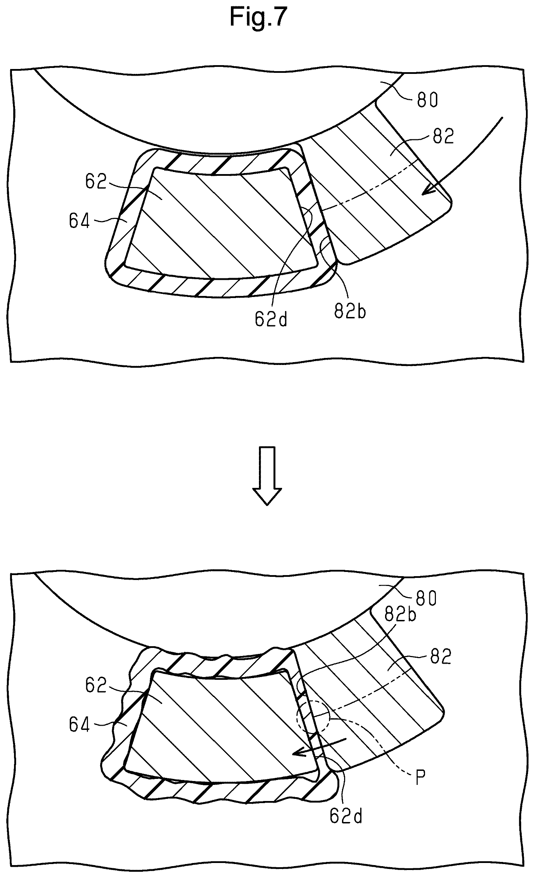

An upper tier in FIG. 7 illustrates the state illustrated in the middle of the lower tier in FIG. 6, i.e., a point in time when the intermediate stopper protrusion 82 comes into contact with the housing protrusion 62 via the O-ring 64. A lower tier in FIG. 7 illustrates a state in which the intermediate stopper protrusion 82 is pressed against the housing protrusion 62, as a result of the steering shaft 14 being rotated further from the state illustrated at the middle of the lower tier in FIG. 6. That is to say, the lower tier in FIG. 7 illustrates a state in which the O-ring 64 is crushed between the intermediate stopper protrusion 82 and the housing protrusion 62.

As illustrated in the upper tier in FIG. 7, when the intermediate stopper protrusion 82 comes into contact with the housing protrusion 62 via the O-ring 64, the housing protrusion 62 and the intermediate stopper protrusion 82 face each other. That is to say, the circumferential side face 62d of the housing protrusion 62 and the circumferential side face 82b of the intermediate stopper protrusion 82 face each other. As described above, in a case in which the outer radius R1 and the outer radius R2 are the same, for example, the entire circumferential side face 62d in the radial direction of the steering shaft 14 comes into contact with the circumferential side face 82b.

Subsequently, as illustrated in the lower tier in FIG. 7, when the intermediate stopper protrusion 82 is pressed against the housing protrusion 62, the O-ring 64 is crushed between the housing protrusion 62 and the intermediate stopper protrusion 82. That is to say, the O-ring 64 is clamped between the circumferential side face 62d and the circumferential side face 82b that oppose each other, and accordingly frictional force acts between the O-ring 64 and the faces 62d and 82b. As described above, in a case in which the outer radius R1 and the outer radius R2 are the same, for example, frictional force acts on the O-ring 64 over the entire range of the circumferential side face 62d in the radial direction of the steering shaft 14.

The long dashed double-short dashed line in the lower tier in FIG. 7 indicates a comparative example in which a protrusion amount of the intermediate stopper protrusion 82 is smaller than that of the present embodiment, for example, the value R4. In the case of this comparative example, the frictional force acts on the O-ring 64 only in a partial range of the circumferential side face 62d. That is to say, there is a part of the circumferential side face 62d at which no frictional force acts on the O-ring 64. The smaller the protrusion amount of the intermediate stopper protrusion 82 is, the greater the range in which such frictional force does not act is.

For example, as illustrated in the lower tier in FIG. 7, the O-ring 64 is crushed between the housing protrusion 62 and the intermediate stopper protrusion 82, and as a result, a part of the O-ring 64 that has been crushed between the circumferential side face 62d and the circumferential side face 82b is pushed out in an upward direction and a downward direction in the drawing. Even in this case, the frictional force acts over the entire range of the circumferential side face 62d, such that the O-ring 64 is suppressed from shifting relative to the groove 62a. On the other hand, in the comparative example indicated by the long dashed double-short dashed line in the lower tier in FIG. 7, a part of the crushed O-ring 64 is pushed out only in the upward direction in the drawing. As a result, a force acts on the O-ring 64 to rotate counterclockwise in the drawing, causing the O-ring 64 to shift relative to the groove 62a.

Also, when the entire circumferential side face 62d is in contact with the circumferential side face 82b, as in the present embodiment, this means that the circumferential side face 82b crushes the O-ring 64 in a region including an approximately middle portion of the circumferential side face 62d in the radial direction of the steering shaft 14, as indicated by "P" in the drawing. This further means that the O-ring 64 is crushed in regions over a range that is symmetrical in an up-down direction in the drawing, across the approximately middle portion of the circumferential side face 62d. This also suppresses the O-ring 64 from being subjected to a force that would cause the O-ring 64 to rotate.

### <Advantages of Present Embodiment>

(1-1) For example, making the outer radius R1 and the outer radius R2 the same, causes frictional force to act on the O-ring 64 over the entire range of the circumferential side face 62d. Accordingly, when the intermediate stopper protrusion 82 is pressed against the housing protrusion 62, the O-ring 64 is suppressed from shifting relative to the groove 62a. This suppresses wear and deterioration of the O-ring 64. Wear and deterioration of the O-ring 64 causes reduction in detection precision of the upper limit value on the right-turn side and the upper limit value on the left-turn side of the steering shaft 14. Accordingly, suppressing wear and deterioration of the O-ring 64 is advantageous in detecting the upper limit value on the right-turn side and the upper limit value on the left-turn side of the steering shaft 14 with high precision.

(1-2) Regarding the protrusion amount of the intermediate stopper protrusion 82, making the outer radius R2 greater than the value R4 is more advantageous with respect to suppressing the O-ring 64 from shifting relative to the groove 62a, than a case of making the outer radius R2 to be equal to or smaller than the value R4. The advantages of suppressing the O-ring 64 from shifting relative to the groove 62a increases as the outer radius R2 approaches the outer radius R1, and is particularly effective when the outer radius R2 is in a range of the value R5 or greater. Accordingly, in the present embodiment, the outer radius R1 and the outer radius R2 are set to be the same. This is beneficial in that the outer radius R1 and the outer radius R2 can be easily set.

(1-3) The O-ring 64 is made of rubber, and therefore has not only elasticity but also viscosity. Accordingly, in a situation in which the O-ring 64 shifts with respect to the groove 62a, wear and deterioration readily occur. In contrast, suppressing the O-ring 64 from shifting relative to the groove 62a is an effective method for solving the problems of wear and deterioration that arise when employing an inexpensive cushioning member such as an O-ring 64 that is made of rubber.

(1-4) In a case of realizing restriction of the rotation of the steering shaft 14 by providing the housing 60, the intermediate stopper 80, and the end stopper 90, paying attention to the contact between the housing protrusion 62 and the intermediate stopper protrusion 82 is important. The reason is that this affects the precision of detecting the upper limit value on the right-turn side and the upper limit value on the left-turn side of the steering shaft 14. Accordingly, in the present embodiment, wear and deterioration of the O-ring 64, which takes up the impact when the housing protrusion 62 and the intermediate stopper protrusion 82 come into contact with each other, is designed to be suppressed. Thus, in a case in which rotation restriction of the steering shaft 14 is realized by providing the housing 60, the intermediate stopper 80, and the end stopper 90, the upper limit value on the right-turn side and the upper limit value on the left-turn side of the steering shaft 14 can be detected with high precision.

### <Other Embodiments>

Note that the above-described embodiment can be carried out modified as follows. The above embodiment and the following other embodiments can be carried out combined with each other, insofar as no technical contradictions arise.
- Regarding the protrusion amount of the intermediate stopper protrusion 82, it is not essential for the outer radius R1 and the outer radius R2 to be the same, as long as the outer radius R2 is greater than the value R4. For example, the outer radius R2 may be in a range of being greater than the value R4 and also less than the value R5, or may be in a range of being greater than or equal to the value R5. Note, however, that it is not essential for the outer radius R2 to be equal to or smaller than the outer radius R1.

Although the entire circumferential side face 62d of the housing protrusion 62 is in contact with the circumferential side face 82b of the intermediate stopper protrusion 82, it is not essential for the circumferential side face 62d and the circumferential side face 82b to be in contact with each other entirely. For example, the circumferential side face 82b may be configured to locally come into contact with the circumferential side face 62d in the region including the approximately middle portion of the circumferential side face 62d in the radial direction of the steering shaft 14, as indicated by "P" in the lower tier in FIG. 7.
- The configuration in which the intermediate stopper 80 rotates in conjunction with the rotation of the end stopper 90 is not limited to the configuration in which the frictional force between the intermediate stopper 80 and the end stopper 90 is utilized. For example, the intermediate stopper 80 may be configured to rotate by the end stopper protrusion 92 pressing the intermediate stopper protrusion 82 in conjunction with rotation of the end stopper 90. In this case, when the rotation of the intermediate stopper 80 is stopped by the intermediate stopper protrusion 82 coming into contact with the housing protrusion 62, the rotation of the end stopper 90 is also stopped.
- It is not essential for the outer face 62b and the inner face 62c of the housing protrusion 62 to be arcuate faces. For example, the outer face 62b and the inner face 62c may be flat faces. Alternatively, just one of the outer face 62b and the inner face 62c may be a flat face. The other embodiments described herein can also be similarly applied to the distal end face 82a of the intermediate stopper protrusion 82. That is to say, the distal end face 82a may be a flat face.
- The housing protrusion 62 may be configured to protrude inward in the radial direction of the steering shaft 14 from the peripheral edge of the shaft hole 60a of the housing 60. Conversely, the intermediate stopper protrusion 82 may be configured to protrude from one face of the intermediate stopper 80 in the axial direction toward the axial direction of the steering shaft 14.
- It is not essential for the phase position of the housing protrusion 62 relative to the peripheral edge of the shaft hole 60a to be the farthest position from the tilt hinge 61. For example, the phase position of the housing protrusion 62 relative to the peripheral edge of the shaft hole 60a may be a position closest to the tilt hinge 61. Also, the phase position of housing protrusion 62 relative to the peripheral edge of shaft hole 60a may be a position between the position farthest from the tilt hinge 61 and the position closest to the tilt hinge 61.
- The device that restricts rotation of the steering shaft 14 is not limited to the device exemplified in the above embodiment. For example, the device may be one that includes a plurality of the intermediate stoppers, which is the second rotating members, rotating in conjunction with the rotation of the end stopper 90, which is the first rotating member. Now, a case in which the device includes a first intermediate stopper and a second intermediate stopper will be described as an example. In such a case, the first intermediate stopper and the second intermediate stopper are rotated along with the rotation of the end stopper 90, in conjunction therewith. When a protrusion of the first intermediate stopper comes into contact with the housing protrusion 62 of the housing 60, the rotation of the first intermediate stopper is then impeded. Accordingly, the second intermediate stopper alone is rotated along with the end stopper 90, in conjunction with the rotation. When the protrusion of the second intermediate stopper comes into contact with the protrusion of the first intermediate stopper, the rotation of the second intermediate stopper is then impeded. Accordingly, the end stopper 90 rotates alone. When the end stopper protrusion 92 comes into contact with the protrusion of the second intermediate stopper, the rotation of the end stopper 90 is then impeded. That is to say, further rotation of the steering shaft 14 is impeded.
- It is not essential for the O-ring 64, which is an annular elastic member, to be made of rubber. Even in this case, the same problem as in the above embodiment will be present in a situation in which the O-ring 64 has not only elasticity but also viscosity. However, it is not essential for the O-ring 64 to have viscosity. Also, when the O-ring 64 is mounted to the outer periphery of the housing protrusion 62, the groove 62a is not essential, and it is sufficient that the O-ring 64 is not fixed using adhesive means such as vulcanization adhesion or the like.
- The steering device 10 has a linkless structure in which the power transmission path between the steering wheel 12 and the steered wheels 34 is always separated, but this is not limiting, and the steering device 10 may have a structure in which the power transmission path between the steering wheel 12 and the steered wheels 34 can be separated by a clutch.

## Claims

1. A steering device including a steering shaft that is able to be operated in a state in which a power transmission path between the steering shaft and steered wheels of a vehicle is separated, the steering device comprising:
a coupled rotating body configured to rotate about an axis of the steering shaft in conjunction with rotation of the steering shaft; and
a rotation stopping body configured to stop the coupled rotating body by coming into contact with the coupled rotating body, wherein
the rotation stopping body includes a first opposing portion that opposes the coupled rotating body when coming into contact with the coupled rotating body,
the coupled rotating body includes a second opposing portion that opposes the rotation stopping body when coming into contact with the rotation stopping body,
the first opposing portion and the second opposing portion are able to come into contact with each other in a circumferential direction of the steering shaft,
the first opposing portion is provided with an annular elastic member mounted to an outer periphery of the first opposing portion,
the first opposing portion includes an outer face situated on an outer side in a radial direction of the steering shaft and an inner face situated on an inner side in the radial direction of the steering shaft,
the second opposing portion includes a distal end face situated on the outer side in the radial direction of the steering shaft,
the outer face has a first radial-direction distance relative to the axis of the steering shaft,
the inner face has a second radial-direction distance relative to the axis of the steering shaft,
the distal end face has a third radial-direction distance relative to the axis of the steering shaft, and
the third radial-direction distance is greater than a value obtained by adding, to the second radial-direction distance, half of a difference between the first radial-direction distance and the second radial-direction distance.

2. The steering device according to claim 1, wherein the third radial-direction distance is greater than or equal to a value obtained by adding, to the second radial-direction distance, three-quarters of the difference between the first radial-direction distance and the second radial-direction distance.

3. The steering device according to claim 2, wherein the third radial-direction distance is the same as the first radial-direction distance.

4. The steering device according to any one of claims 1 to 3, wherein the first opposing portion and the second opposing portion are configured to be able to come into contact with each other in a region including an approximately middle portion of the first opposing portion in the radial direction of the steering shaft.

5. The steering device according to any one of claims 1 to 3, wherein the annular elastic member is an O-ring.

6. The steering device according to any one of claims 1 to 3, further comprising:
a housing that rotatably supports the steering shaft;
a first rotating member linked to the steering shaft so as to rotate in conjunction with rotation of the steering shaft; and
a second rotating member configured to rotate with the first rotating member, wherein
the first opposing portion is provided on the housing,
the second opposing portion is provided on the second rotating member, and
the first rotating member is configured such that, in a state in which rotation of the second rotating member in a predetermined direction is restrained by the first opposing portion, and in a case in which the first rotating member is in contact with the second rotating member, rotation in the predetermined direction is restrained.
